# EUROPÄISCHE PATENTSCHRIFT

(11) **EP 1 101 954 B1**
(45) Veröffentlichungstag und Bekanntmachung des Hinweises auf die Patenterteilung: **14.03.2007**
(21) Anmeldenummer: 00120152.4
(22) Anmeldetag: 21.09.2000
(51) Int. Cl.: F16B 2/02, B60R 21/20

(54) **Rastverbindung**
Snap-in connection
Fixation par encliquetage

(30) Priorität: 15.11.1999 DE 29920024 U
(43) Veröffentlichungstag der Anmeldung: 23.05.2001
(73) Patentinhaber: TRW Automotive Safety Systems GmbH, 63743 Aschaffenburg (DE)
(72) Erfinder: Frisch, Ralph, 63776 Mömbris (DE); Derrick, John-Oliver, 97265 Hettstadt (DE)
(74) Vertreter: Sties, Jochen

(56) Entgegenhaltungen:
- EP-A- 0 739 788
- US-A- 5 445 409
- US-A- 5 484 223
- US-A- 5 511 819
- US-A- 5 816 608
- US-A- 5 829 777
- US-A- 5 876 060
- PATENT ABSTRACTS OF JAPAN vol. 1997, no. 07, 31. Juli 1997 (1997-07-31) & JP 09 079221 A (YAZAKI CORP), 25. März 1997 (1997-03-25)
- KRAMMER VERLAG: "werbeanzeige der Fa. KUECO" SANITÄR- UND HEIZUNGSTECHNIK, August 1994 (1994-08), Seite 84 XP002217246 Düsseldorf
- PATENT ABSTRACTS OF JAPAN vol. 1996, no. 01, 31. Januar 1996 (1996-01-31) & JP 07 233805 A (UNISIA JECS CORP), 5. September 1995 (1995-09-05)

## Beschreibung

Die Erfindung betrifft eine Rastverbindung, insbesondere für eine Gassack-Abdeckung eines Fahrzeuginsassen-Rückhaltesystems, gemäß dem Oberbegriff des Anspruchs 1.

Bei derartigen Rastverbindungen weist üblicherweise das andere Halteteil eine Öffnung auf. Zum Einrasten der Verbindung werden die beiden Halteteile gegeneinander verschoben. Dabei wird die Rastnase durch das andere Halteteil eingedrückt, bis die Öffnung über der Rastnase liegt und diese einschnappen kann. Damit die Rastnase entsprechend beweglich ist, muß sie aus ausreichend dünnem Material geformt sein. Dies setzt aber die Festigkeit der Rastverbindung herab. Außerdem besteht die Gefahr, daß die Rastnase beim Eindrücken oder beim Wiederlösen der Rastverbindung eine bleibende Verformung erleidet, so daß sie beim nächsten Zusammenfügen nicht mehr einrastet oder gar abbricht.

Eine Rastverbindung gemäß dem Oberbegriff des Anspruchs 1 ist aus der US-A-5,876,060 bekannt. Die Rastnase ist an einer freitragenden Zunge angeordnet, die elastisch ausgelenkt wird, wenn eine Lasche zwischen die ihr zugeordnete Führung eingeschoben wird.

Die Erfindung schafft eine Rastverbindung, die die genannten Nachteile vermeidet und die darüber hinaus einfach und kostengünstig herzustellen und anzuwenden ist.

Zu diesem Zweck sind erfindungsgemäß die Merkmale des Anspruchs 1 vorgesehen. Damit ist es nicht mehr erforderlich, die Rastnase elastisch beweglich zu gestalten, so daß sie entsprechend massiv und stabil ausgeführt sein kann. Die zum Einrasten der Verbindung erforderliche federnde Wirkung wird durch die Wölbung der Lasche erzeugt.

Weitere Einzelheiten und Ausgestaltungen der Erfindung und deren Vorteile ergeben sich aus der nachfolgenden Beschreibung einer beispielhaften Ausführungsform, die in den beigefügten Abbildungen dargestellt ist, in welchen zeigen:
- Figur 1 eine perspektivische Ansicht eines Gassackmoduls mit einer Rastverbindung gemäß einer bevorzugten Ausführungsform der Erfindung;
- Figur 2 ein Detail eines Halteteils des Gassackmoduls aus Figur 1;
- Figur 3 eine Ansicht einer Seite des Gassackmoduls aus Figur 1;
- Figur 4 einen Schnitt durch das Gassackmodul aus Figur 3 entlang der Linie IV-IV und

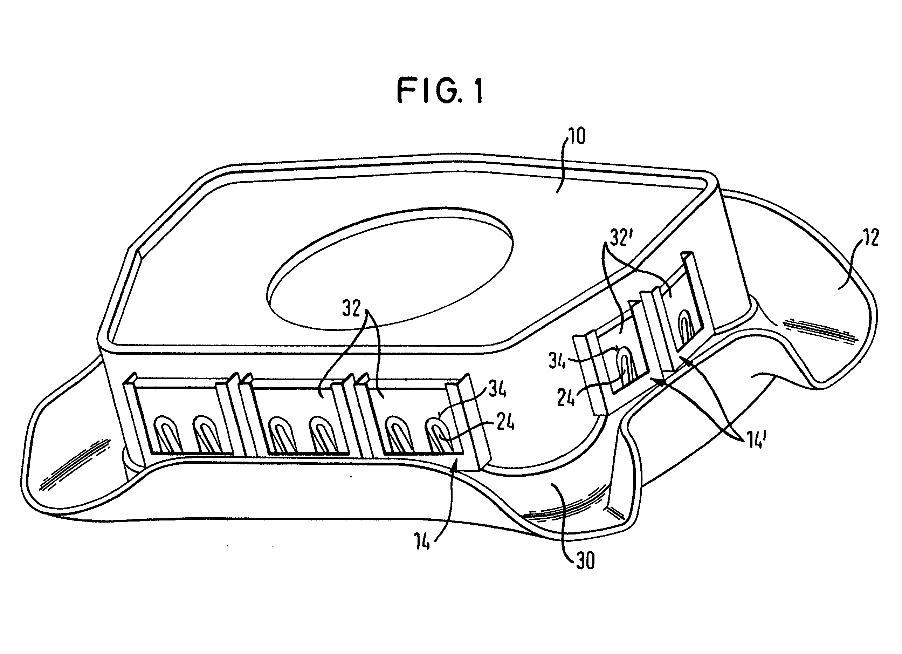

Das Gassackmodul in Figur 1 besteht aus einem Gehäuse 10 und einer Gassack-Abdeckung 12. In der Abbildung ist die am Lenkrad zu befestigende Seite des Gehäuses 10 obenauf; die zum Fahrzeuginsassen weisende Seite der Gassackabdeckung 12 ist unten.

Das Gehäuse 10 ist im wesentlichen quaderförmig. An den Seitenflächen des Gehäuses 10 sind Halteteile 14, 14' angebracht. Das Gehäuse 10 kann als Kunststoff-Spritzgußteil ausgeführt sein, wobei vorteilhafterweise die Halteteile 14, 14' mitangespritzt sind.

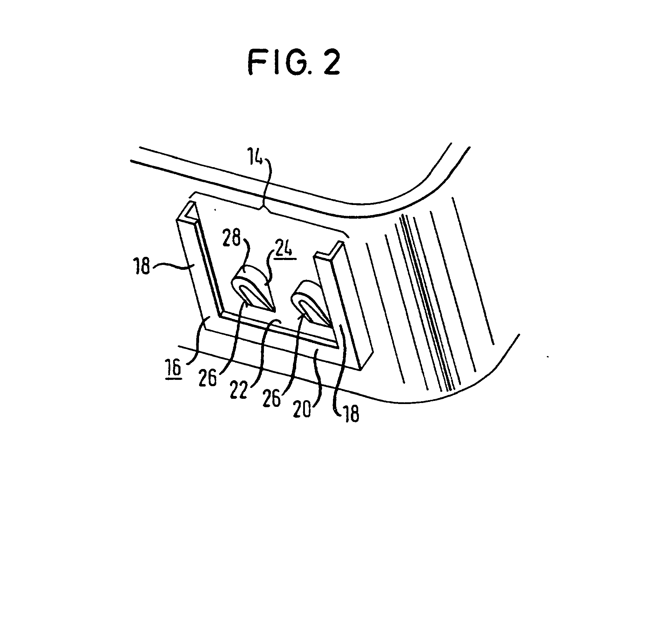

In Figur 2 ist eines der Halteteile 14 genauer zu sehen. Das Halteteil 14 umfaßt ein Führungselement 16 und zwei Rastnasen 24. Das Führungselement 16 besteht aus zwei Führungen 18 mit L-förmigem Querschnitt und einer Traverse 20. Die Führungen 18 sind am Ende ihrer langen Schenkel fest an dem Gehäuse angebracht, und zwar so, daß sich ihre kurzen Schenkel gegenüberstehen. Am im Bild unteren Ende sind die kurzen Schenkel durch die Traverse 20 miteinander verbunden. Somit bilden die Enden der Führungen 18 zusammen mit der Traverse 20 und dem Gehäuse 10 einen Durchgang 22. Zwischen den beiden Führungen 18 sind am Gehäuse 10 zwei Rastnasen 24 ausgebildet. Die Rastnasen 24 verlaufen parallel zueinander und weisen eine Rampenfläche 26 und einen ebenen, abgerundeten Kopf 28 auf. Die Rampenflächen 26 der Rastnasen 24 sind der Traverse 20 zugewandt. Die Rastnasen 24 sind am Gehäuse 10 als Ausformungen angespritzt. Da sie nicht beweglich sein müssen, weisen sie keine Hinterschneidungen auf. Dies gewährleistet eine kostengünstige Herstellung, da keine komplizierte Spritzform erforderlich ist. Zudem sind die Rastnasen sehr stabil, weil sie an ihrer gesamten Grundfläche mit dem Gehäuse verbunden sind.

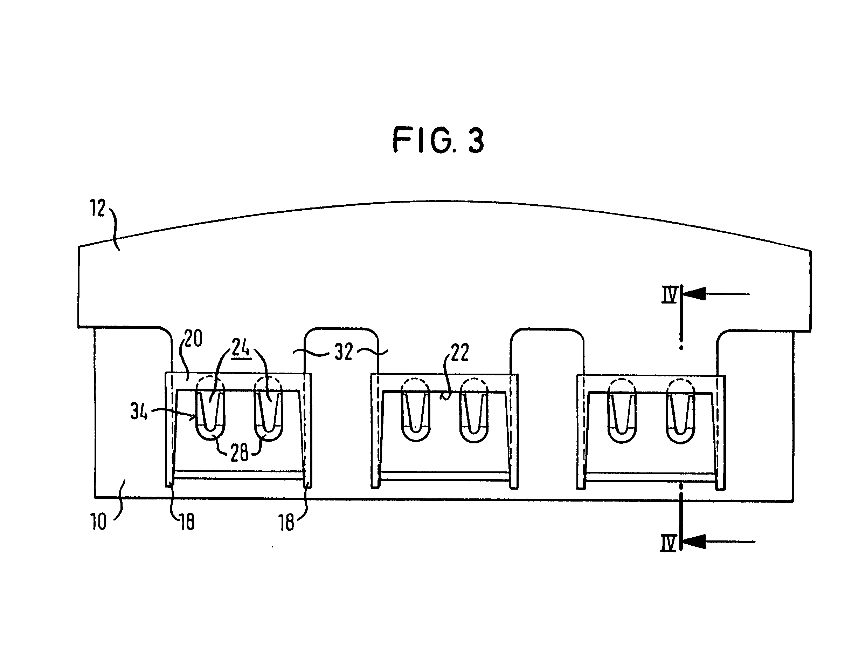

Wie in Figur 3 besser zu sehen ist, verlaufen die Führungen 18 nicht parallel zueinander, sondern vom Durchgang 22 ausgehend in Richtung der Köpfe 28 der Rastnasen 24 aufeinander zu. Dabei verjüngen sich die kürzeren Schenkel der Führungen 18 keilförmig. In Abbildung 1 ist zu sehen, daß an der Längsseite des Gehäuses 10 drei derartige Halteteile 14 angebracht sind. An der Schmalseite des Gehäuses 10 sind zwei Halteteile 14' angebracht, die jeweils nur mit einer Rastnase versehen sind. Dasselbe gilt für die in Figur 1 nicht sichtbare Schmalseite, während auf der nicht sichtbaren Längsseite wiederum drei Führungselemente 14 mit jeweils zwei Rastnasen angebracht sind. Die Anzahl der Halteteile je Seite und die Art, ob mit einer, zwei oder mehr Rastnasen, ist hier beispielhaft dargestellt und kann je nach Anwendung, beispielsweise auf die Größe des Gehäuses und auf die erforderliche Verbindungskraft, abgestimmt werden.

In Figur 1 ist ebenfalls zu sehen, daß an der dem Gehäuse 10 zugewandten Seite der Gassackabdeckung 12 eine Wulst 30 ausgebildet ist. Die Gassackabdeckung 12 ist von unten auf das Gehäuse 10 aufgesetzt, so daß die Wulst 30 den unteren Rand des Gehäuses 10 umschließt. Am oberen Rand der Wulst 30 sind Halteteile in Form von Laschen 32, 32' ausgebildet. Diese Laschen 32, 32' erstrecken sich durch die Durchgänge 22 und entlang der Führungen 18 der Halteteile 14, 14' am Gehäuse 10. In den Laschen 32, 32' sind Öffnungen 34 ausgespart, in welche die Rastnasen 24 eingreifen. Entsprechend der Anzahl der Rastnasen 24 sind in den Laschen 32, 32' jeweils zwei bzw. eine Öffnung vorhanden. Auch die Gassackabdeckung 12 kann vorteilhafterweise ein Kunststoffspritzgußteil sein.

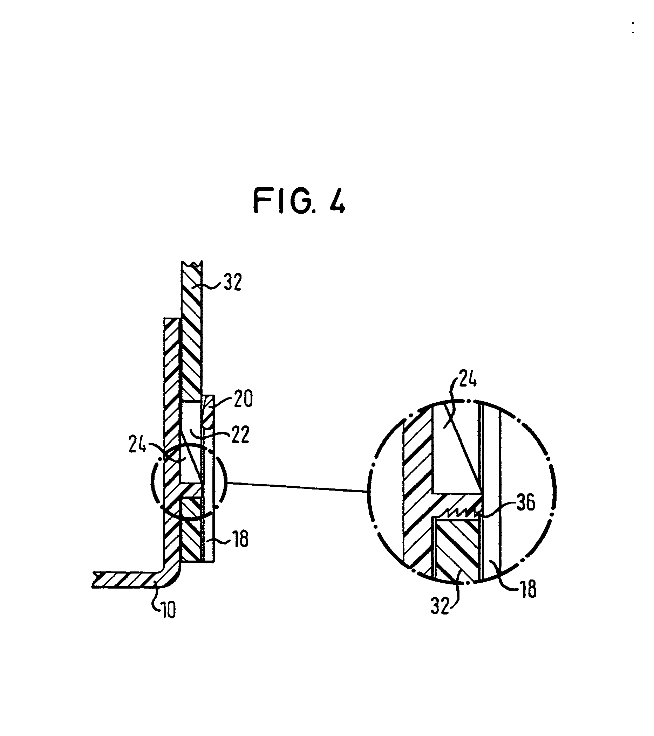

Bei der Montage wird die Gassackabdeckung 12 auf das Gehäuse aufgeschoben, so daß die Laschen 32, 32' die Durchgänge 22 passieren. Dabei werden die Laschen 32, 32' von den aufeinander zu verlaufenden Führungen 18 geleitet, so daß Gehäuse 10 und Gassackabdeckung 12 relativ zueinander in die richtige Position kommen. Beim Einschieben der Laschen 32, 32' gleiten diese auf den Rampenflächen 26 und werden von diesen zwischen den Führungen 18 senkrecht zur Verschieberichtung gewölbt. Erst wenn sich die Öffnungen 34 über den Rastnasen 24 befinden, können sich die Laschen 32, 32' aufgrund ihrer Elastizität wieder strecken, wobei die Rastnasen 24 in die Öffnungen 34 eingreifen und damit die Rastverbindung hergestellt ist (Fig. 4).

Die Höhe der Rastnasen bestimmt die Stärke der Verwölbung der Laschen. Je höher die Rastnasen sind, desto größer ist aber auch die Angriffsfläche für die Kraft, die zwischen den Halteteilen übertragen werden kann. Die maximal mögliche Verwölbung ist allerdings auch durch die Dicke der Laschen begrenzt. In der gezeigten Ausführungsform ist die Höhe der Rastnasen 24 so gewählt, daß diese gerade noch durch die Laschen 32, 32' hindurchragen. Damit ist die maximale Angriffsfläche für die Verbindungskraft vorhanden und die Verbindung gegen unbeabsichtigtes Lösen optimal gesichert. Wenn die Rastnasen nämlich nur zum Teil in die Öffnungen eingreifen, könnten sich die Laschen und die Rastnasen bei einer hohen Verbindungskraft durch das an der Angriffsfläche wirkende Moment verbiegen. Dies hätte zur Folge, daß die Angriffsfläche nicht mehr senkrecht zur Verbindungskraft steht und deshalb die Laschen von den Rastnasen abrutschen können.

Das Abrutschen der Laschen von den Rastnasen kann alternativ oder zusätzlich dadurch verhindert werden, daß beispielsweise am Kopf 28 der Rastnase 24 eine Mikroverzahnung 34 ausgebildet ist. Eine derartige Mikroverzahnung ist in dem vergrößerten Ausschnitt in Fig. 4 dargestellt.

Die gezeigte Ausführungsform eines Gassackmoduls stellt nur ein Beispiel für die Anwendung der erfindungsgemäßen Rastverbindung dar. Zahlreiche Veränderungen sind denkbar, so können die Halteteile mit den Führungselementen und den Rastnasen genausogut an der Gassack-abdeckung und die Laschen an dem Gehäuse angebracht sein.

In einer anderen Ausführungsform können die Rastnasen statt am Gehäuse an den Laschen angebracht sein, wobei die Rampenfläche in die andere Richtung weisen müßte. Die Öffnungen wären dann im Gehäuse vorzusehen und die Traverse wegzulassen, so daß sich die Laschen beim Einschieben in die Führungen verwölben, bis die Rastnasen in die Öffnungen am Gehäuse eingreifen können.

## Patentansprüche

1. Rastverbindung, insbesondere für eine Gassack-Abdeckung (12) eines Fahrzeuginsassen-Rückhaltesystems, mit zwei Halteteilen (14, 14', 32, 32'), wobei eines der Halteteile (14, 14') mit mindestens einer Rastnase (24) versehen ist, wobei die Rastnase so ausgestaltet ist, daß eines der Halteteile (32, 32') bei einer Verschiebung der beiden Halteteile relativ zueinander durch eine im wesentlichen senkrecht zur Verschieberichtung wirkende Kraft gewölbt wird, bevor die Rastnase einrastet, wobei das eine Halteteil (32, 32') als Lasche gestaltet ist und das andere Halteteil (14, 14') Führungselemente (16) aufweist, mittels derer die Lasche (32, 32') geführt wird, **dadurch gekennzeichnet, daß** die Lasche (32, 32') von den Führungselementen (16) so geführt wird, daß sie zwischen den beiden Führungselementen senkrecht zur Verschieberichtung gewölbt wird, bis die Rastnase einrastet.

2. Rastverbindung nach Anspruch 1, **dadurch gekennzeichnet, daß** eines der Halteteile (32, 32') wenigstens eine Öffnung (34) aufweist, in die die Rastnase (24) eingreift.

3. Gassack-Modul mit einer Rastverbindung nach einem der vorhergehenden Ansprüche, **dadurch gekennzeichnet, daß** eines der Halteteile (32, 32') fest mit der Abdeckung (12) verbunden ist.

4. Gassack-Modul mit einer Rastverbindung nach einem der Ansprüche 1 und 2, **dadurch gekennzeichnet, daß** eines der Halteteile (14, 14') fest mit dem Gehäuse (10) verbunden ist.

5. Gassack-Modul mit einer Rastverbindung nach einem der Ansprüche 1 und 2, **dadurch gekennzeichnet, daß** die Rastnase (24) mit einer Mikroverzahnung (34) versehen ist.

## Claims

1. A detent connection, in particular for a gas bag cover (12) of a vehicle occupant restraint system, comprising two retaining parts (14, 14', 32, 32'), one of the retaining parts (14, 14') being provided with at least one detent nose (24), the detent nose being configured such that upon shifting of the two retaining parts relative to each other, one of the retaining parts (32, 32') is arched by a force acting substantially perpendicularly to the shifting direction before the detent nose latches in place, one retaining part (32, 32') being configured as a tab and the other retaining part (14, 14') having guide elements (16) by means of which the tab (32, 32') is guided, **characterized in that** the tab (32, 32') is guided by the guide elements (16) such that it is arched between the two guide elements perpendicularly to the shifting direction until the detent nose latches in place.

2. The detent connection as set forth in claim 1, **characterized in that** one of the retaining parts (32, 32') has at least one opening (34) into which the detent nose (24) engages.

3. A gas bag module comprising a detent connection as set forth in either of the preceding claims, **characterized in that** one of the retaining parts (32, 32') is firmly connected to the cover (12).

4. A gas bag module comprising a detent connection as set forth in either of claims 1 and 2, **characterized in that** one of the retaining parts (14, 14') is firmly connected to the housing (10).

5. A gas bag module comprising a detent connection as set forth in either of claims 1 and 2, **characterized in that** the detent nose (24) is provided with a microserration (34).

## Revendications

1. Liaison par enclenchement, en particulier pour un couvercle de coussin à gaz (12) d'un système de retenue de passager de véhicule, comportant deux parties de retenue (14, 14', 32, 32') dont l'une des parties de retenue (14, 14') est pourvue d'au moins un ergot d'enclenchement (24), l'ergot d'enclenchement étant réalisé de telle sorte que l'une des parties de retenue (32, 32'), lors d'un déplacement des deux parties de retenue l'une par rapport à l'autre, est arquée par une force agissant sensiblement perpendiculairement à la direction de déplacement, avant que l'ergot d'enclenchement s'enclenche, ladite une partie de retenue (32, 32') étant réalisée sous forme de patte, et l'autre partie de retenue (14, 14') présentant des éléments de guidage (16) au moyen desquels la patte (32, 32') est guidée, **caractérisée en ce que** la patte (32, 32') est guidée par les éléments de guidage (16) de telle sorte qu'elle est arquée entre les deux éléments de guidage perpendiculairement à la direction de déplacement jusqu'à ce que l'ergot d'enclenchement vienne s'enclencher.

2. Liaison par enclenchement selon la revendication 1, **caractérisée en ce qu'**une des parties de retenue (32, 32') présente au moins une ouverture (34) dans laquelle s'engage l'ergot d'enclenchement (24).

3. Module de coussin à gaz comportant une liaison par enclenchement selon l'une des revendications précédentes, **caractérisé en ce qu'**une des parties de retenue (32, 32') est reliée de manière solidaire au couvercle (12).

4. Module de coussin à gaz comportant une liaison par enclenchement selon l'une des revendications 1 et 2, **caractérisé en ce qu'**une des parties de retenue (14, 14') est reliée de manière solidaire au boîtier (10).

5. Module de coussin à gaz comportant une liaison par enclenchement selon l'une des revendications 1 et 2, **caractérisé en ce que** l'ergot d'enclenchement (24) est pourvu d'une microdenture (34).
